# EUROPÄISCHE PATENTSCHRIFT

(11) **EP 0 806 236 B1**
(45) Veröffentlichungstag und Bekanntmachung des Hinweises auf die Patenterteilung: **02.01.2003**
(21) Anmeldenummer: 97106610.5
(22) Anmeldetag: 22.04.1997
(51) Int. Cl.: B01D 53/86, F23J 15/00

(54) **Verfahren zur Stickoxidminderung von Verbrennungsabgasen und Anlage zur Durchführung des Verfahrens**
Process and apparatus for reducing NOx emission of combustion exhaust gases
Procédé et appareil pour éliminer les oxydes d'azote des gaz de combustion

(30) Priorität: 08.05.1996 DE 19618384
(43) Veröffentlichungstag der Anmeldung: 12.11.1997
(73) Patentinhaber: ALSTOM Power Boiler GmbH, 70329 Stuttgart (DE)
(72) Erfinder: Fischer, Frank, 70806 Kornwestheim (DE); Berner, Michael, 51465 Bergisch-Gladbach (DE); Schnieder, Klaus, 70806 Kornwestheim (DE); Cremer, Jürgen, 50126 Bergheim (DE)

(56) Entgegenhaltungen:
- WO-A-87/06853
- DE-A- 2 733 408
- DE-A- 2 852 800
- US-A- 4 737 345
- VGB KRAFTWERKSTECHNIK, Bd. 71, Nr. 5, - 1991 ESSEN (DE), Seiten 475-478, XP000207986 RENATUS H.J.: "Die Entwicklung der Grossarmaturen in Rauchgasreinugungsanlagen"

## Beschreibung

Die Erfindung betrifft ein Verfahren zur Stickoxidminderung von Verbrennungsabgasen, insbesondere von Verbrennungsabgasen aus Abfallverbrennungsanlagen und eine Anlage zur Durchführung des Verfahrens.

Zur Verminderung von Stickoxiden in Verbrennungsabgasen ist es bekannt, die Stickoxide nach dem Verfahren der selektiven katalytischen Reduktion (SCR) durch Kontaktierung mit DENOX-Katalysatormaterial - bei gleichzeitiger Anwesenheit eines Reduktionsmittels, z. B. Ammoniak - katalytisch zu Stickstoff und Wasser umzusetzen.

Bei der Anwendung dieses bekannten SCR-Verfahrens zur Verbrennungsabgasreinigung hinter Abfallverbrennungsanlagen muß die Betriebstemperatur des DENOX-Katalysators beachtet werden, da die zulässige Betriebstemperatur eines DENOX-Katalysators in gewissen Grenzen festliegt.

Die obere Grenze wird dabei zum einen durch das Erweichungs- und Agglomerationsverhalten immer wieder auftretender Staubzusammensetzungen, z. B. alkalireicher Flugstäube, gesetzt, zum anderen soll durch die Begrenzung nach oben eine unerwünschte, übermäßige Konversion von SO₂ zu SO₃ unterbunden werden. Diese obere Temperaturgrenze liegt in Abfallverbrennungsanlagen bei ca. 300 bis 350 °C.

Die untere Grenze wird durch die Möglichkeit einer Ammoniumbisulfatbildung im DENOX-Reaktor bei gewissen Betriebszuständen bestimmt. Diese untere Temperaturgrenze liegt abhängig vom SOₓ- und NH₃-Gehalt der Verbrennungsabgase bei ca. 250 bis 300 °C.

Zum Betrieb eines solchen DENOX-Reaktors ist deshalb sicherzustellen, daß nicht nur bei auftretenden Teillast- und Überlastfällen der Verbrennungsanlage sondern auch während einer Reisezeit von mehreren 1000 Betriebsstunden ein bestimmtes Temperaturfenster eingehalten wird.

Ist der DENOX-Reaktor in Strömungsrichtung des Verbrennungsabgases gesehen unmittelbar nach dem Austritt des Verbrennungsabgases aus den Dampferzeuger-Heizflächen der Abfallverbrennungsanlage angeordnet, so tritt das Verbrennungsabgas üblicherweise mit einer Temperatur unterhalb oder gleich der erforderlichen Katalysator-Betriebstemperatur oder, in seltenen Fällen, tritt es mit einer Temperatur oberhalb der erforderlichen Katalysator-Betriebstemperatur aus der Verbrennungsanlage aus. Tritt das Verbrennungsabgas unterhalb der minimal zulässigen Katalysator-Betriebstemperatur aus, was vor allem im Teillastbereich der Verbrennungsanlage vorkommt, muß die Abgastemperatur heraufgeregelt werden. Dies geschieht durch den Einsatz von zusätzlichen Brennern, z. B. Kanalbrennern oder Wärmeüberträgern zur Temperaturerhöhung des Verbrennungsabgases. Nachteilig hierbei ist, daß beim Einsatz von Kanalbrennern ein zusätzlicher Primärenergieverbrauch stattfindet bzw. beim Einsatz von Wärmeüberträgern exergetisch wertvoller Dampf oder anderes eingesetzt wird.

Tritt das Verbrennungsabgas oberhalb der maximal zulässigen Katalysator-Betriebstemperatur aus, so muß die Abgastemperatur heruntergeregelt werden. Dies geschieht vorzugsweise durch den Einsatz von Einspritz- oder Verdampfungskühlern zur Temperaturabsenkung der Verbrennungsabgase. Nachteilig hierbei ist eine Wirkungsgradverschlechterung der Gesamtanlage durch die Flüssigkeitsverdampfung im Abgasstrom und der Volumenvergrößerung des Abgases durch den zusätzlich eingebrachten Dampf.

Durch die Veröffentlichung "Kehrichtverbrennungsanlage Zürich-Hagenholz" in "Thermische Abfallbehandlung", EF-Verlag für Energie- und Umwelttechnik GmbH, Verfasser Karl Joachim Thome'-Kozmiensky, Ausgabe 1994 ist eine Abfallverbrennungsanlage bekannt geworden, deren Verbrennungsabgase nach Austritt aus der Verbrennungsanlage in einem Elektrofilter entstaubt, anschließend in bestimmten Lastfällen mittels Brenner unter Nutzung von Primärenergie, in diesem Fall Erdgas, auf die erforderliche Betriebstemperatur des DENOX-Katalysators gebracht, im DENOX-Katalysator entstickt und anschließend weiterbehandelt (Abkühlung im Abhitzekessel, Entschwefelung im Naßwäscher) werden.

Nachteilig bei dieser bekannten Anlage ist der bereits oben genannte Primärenergieverbrauch zur Temperaturerhöhung des Verbrennungsabgases und die damit verbundenen Betriebskosten sowie die Investitionskosten der Brenner.

Durch Druckschrift DE OS 27 33 408 ist eine Kesselvorrichtung mit einer Feuerung, einem Rauchgaskanal und in diesem angeordneten Wärmetauscherstufen sowie mit mindestens ein mit einem Katalysator beschickter Denitrator in einem der optimalen Reaktionstemperatur des Katalysators entsprechenden Denitratorabschnitt des Rauchgaskanals zur Denitration des Rauchgases bekannt geworden. Zur Regelung der optimalen Reaktionstemperatur des Rauchgases ist rauchgasseitig ein gesonderter Bypasskanal mit Regelein- bzw. -vorrichtungen vorgesehen, durch den bei Bedarf ein Teil des Rauchgases vor der ersten Wärmetauscherstufe entnommen wird, an der ersten Wärmetauscherstufe ungekühlt vorbeigeleitet wird und stromabwärts dieser Wärmetauscherstufe sowie stromaufwärts des Denitrators dem Rauchgasstrom im Rauchgaskanal wieder zugeführt wird. Nachteilig ist bei dieser Anordnung der aufwändige Bypasskanal einschließlich der erforderlichen Regeleinrichtungen sowie die Tatsache, dass zur Regelung der optimalen Reaktionstemperatur des Katalysators nur rauchgasseitig operiert werden kann während wasser/dampfseitig keine Eingriffsmöglichkeit in die Temperaturregelung möglich ist. Es ist ferner nicht vorteilhaft, dass dem Rauchgashauptstrom im Rauchgaskanal seitlich durch den Bypasskanal ein wärmerer Rauchgasteilstrom zugemischt wird, da sich beide Ströme bis zum Eintritt in den Denitrator nicht homogen vermischt haben und sich demzufolge partiell keine optimale Reaktionstemperatur vor dem Denitrator einstellt. Um die Möglichkeit zu haben, die Denitrationskatalysatoren zu waschen, ohne dass es zu unerwünschten Betriebsunterbrechungen der Kesselvorrichtung führt ist ein Großteil des Rauchgasweges zweistraßig ausgebildet worden, wobei jede der beiden Straßen einzeln abgesperrt werden können und die Reinigung der Katalysatoren vorgenommen werden kann. Doch trotz dieser aufwändigen Anordnung - sämtliche Einrichtungen wie Absperrschieber, Primär- und Sekundärvorwärmer, Denitratoren und Gas-/Luftwärmetauscher sind doppelt vorhanden - kann die Regelung der optimalen Reaktionstemperatur des Rauchgases nur rauchgasseitig über die dann ebenfalls zweifach vorhandenen Bypasskanäle und der hierfür notwendigen Regeleinrichtungen vorgenommen werden. Deren Nachteile sind bereits oben geschildert.

Es ist somit Aufgabe der vorliegenden Erfindung, ein Verfahren zur Stickoxidminderung von Verbrennungsabgasen, insbesondere von Verbrennungsabgasen aus Abfallverbrennungsanlagen sowie eine Anlage zur Durchführung des Verfahrens zu schaffen, das die obengenannten Nachteile weitestgehend vermeidet.

Diese Aufgabe wird gemäß den kennzeichnenden Merkmalen der Patentansprüche 1 und 14 gelöst.

Weitere vorteilhafte Ausgestaltungen der Erfindung sind den Unteransprüchen zu entnehmen.

Durch die erfindungsgemäße Lösung ergeben sich die folgenden Vorteile:
1. Erhöhung des Wirkungsgrades der Gesamtanlage durch den Entfall eines zusätzlichen Fremdenergieeinsatzes zur Temperaturerhöhung des Verbrennungsabgases bzw. einer Wasserverdampfung im Verbrennungsabgasstrom zur Temperaturabsenkung des Verbrennungsabgases zur Einhaltung des erforderlichen Betriebstemperaturbereiches der DENOX-Katalysatoren.
2. Einfache Staubabscheider, auch bei hohem Feinkornanteil der Feststoffe, ausreichend.
3. Kompaktere Bauweise der Gesamtanlage und dadurch bessere Raumausnutzung.

Die Erfindung wird anhand der Beschreibung und der Zeichnung näher erläutert.

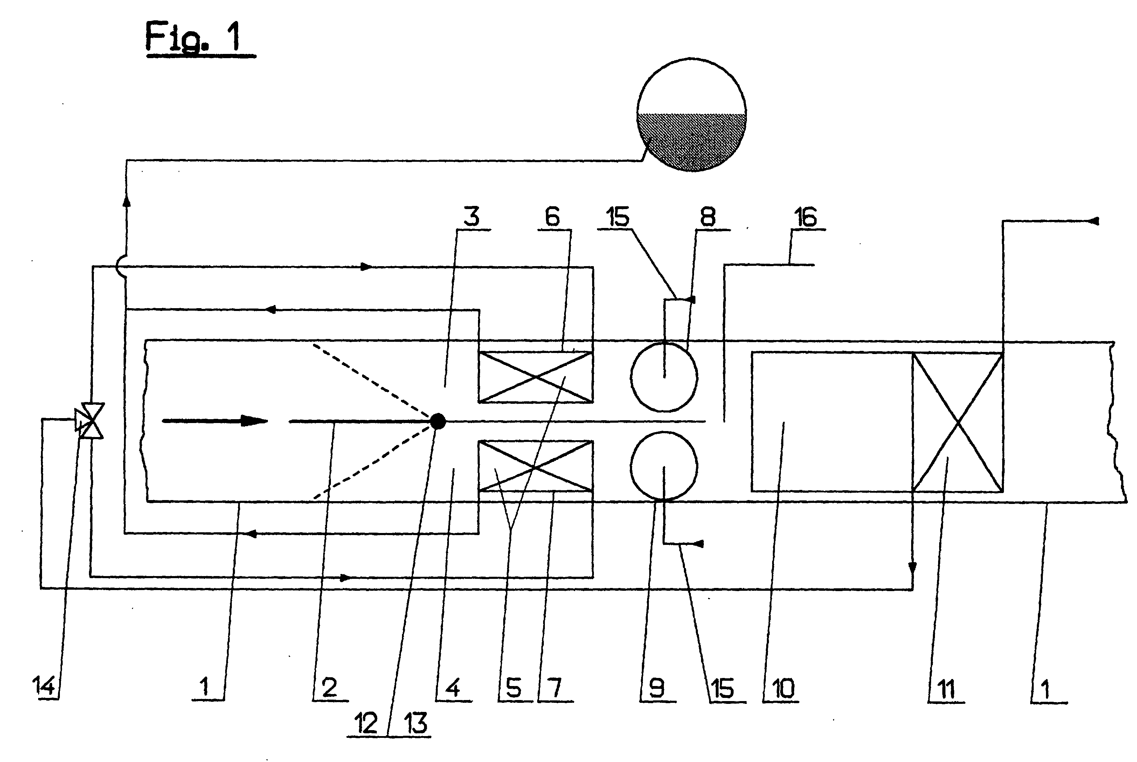

Es zeigt
- Fig. 1: Fließschema des Verbrennungsabgases für das erfindungsgemäße Verfahren zur Stickoxidminderung.

Fig. 1 zeigt in schematischer Darstellung den Weg des Verbrennungsabgases einer Abfallverbrennungsanlage nach dem unmittelbaren Austritt aus einer nicht dargestellten Abfallverbrennungsanlage innerhalb der Abgasleitung 1, wobei die Durchströmungsrichtung des Abgases durch die Pfeilrichtung angezeigt ist.

Das durch die Heizflächen des Dampferzeugers der nicht dargestellten Abfallverbrennungsanlage abgekühlte Verbrennungsabgas wird durch eine Abgasleitung 1 einem DENOX-Reaktor 10 zugeführt. Dabei ist erfindungsgemäß stromaufwärts des DENOX-Reaktors 10, d. h. zwischen Austritt des Verbrennungsabgases aus der nicht dargestellten Abfallverbrennungsanlage und dem DENOX-Reaktor 10 die Abgasleitung 1 zweistraßig ausgebildet. Die zwei Abgasstraßen 3, 4 sind erfindungsgemäß jeweils mit einem Economizerpaket 6, 7 einer ersten Economizerstufe 5 und der Eintritt zu den Abgasstraßen 3, 4 mit einer Gasweiche 2 ausgebildet. Die Gasweiche 2 ermöglicht in Mittelstellung, wie in Fig. 1 dargestellt, die Durchströmung beider Abgasstraßen 3, 4 und in Weichenstellung (in Fig. 1 strichliert dargestellt) die Durchströmung der Abgasstraßen 3 oder 4 durch das Verbrennungsabgas.

Die in dieser Beschreibung vorgenommene Bezeichnung erste Economizerstufe 5 und zweite Economizerstufe 11 (im Verlauf der weiteren Beschreibung) ist in Bezug der Durchströmungsrichtung des Verbrennungsabgases definiert.

In bevorzugter Weise sind den jeweiligen Economizerpaketen 6, 7 der ersten Economizerstufe 5 in Durchströmungsrichtung des Abgases innerhalb der Abgasstraße 3, 4 jeweils mindestens ein Abscheider 8, 9 zur Abscheidung von Feststoffen aus dem Verbrennungsabgas nachgeschaltet.

Die Querschnitte der zwei Abgasstraßen 3, 4, die wärmetechnischen Auslegungsparameter der beiden Economizerpakete 6, 7 der ersten Economizerstufe 5 sowie die Entstaubungsleistung der beiden Abscheider 8, 9 sind bevorzugt gleich groß ausgelegt und die Economizerpakete 6, 7 und Abscheider 8, 9 parallel zueinander ausgebildet, um unterschiedliche Druckverluste bzw. Abgasströme mit unterschiedlichen Temperaturen in den Abgasstraßen 3, 4 und im DENOX-Reaktor 10 zu unterbinden. Zur Erzielung dieser Kriterien sind auch die Abgasstraßen 3, 4 vorzugsweise parallel zueinander ausgebildet.

Femer sind die wärmetechnischen Auslegungsparameter und somit die Größe der Economizerpakete 6, 7 der ersten Economizerstufe 5 bevorzugt dahingehend ausgelegt, daß das Verbrennungsabgas bei 110 % Verbrennungsanlagenleistung, bezogen auf die Nennlast, und zu Ende der Dampferseugerreisezeit auf eine Abgastemperatur abgekühlt wird, die der maximalen DENOX-Reaktor-Betriebstemperatur, z. B. 320 °C, entspricht (die Messung der Abgastemperatur und somit der Betriebstemperatur erfolgt in Strömungsrichtung des Abgases gesehen unmittelbar vor dem DENOX-Reaktor 10 oder ggf. im DENOX-Reaktor 10 durch Mittel 16 zur Temperaturerfassung).

Bei Teillastbetrieb der Abfallverbrennungsanlage wird bei Unterschreitung des vorbestimmten Teillastbereiches der Verbrennungsanlage von vorzugsweise 60 - 80 %, bezogen auf Nennlast der Verbrennungsanlage, eine der beiden Abgasstraßen 3, 4 durch die Gasweiche 2 abgesperrt. Der nicht dargestellte Antrieb 12 der Gasweiche 2 wird dabei von einem Steuermittel 13 in Abhängigkeit des Teillastbereiches gesteuert.

Bei einer Betriebsweise, bei der beide Abgasstraßen 3, 4 durch das Abgas durchströmt werden, werden beide Economizerpakete 6, 7 der ersten Economizerstufe 5 durch einen Dreiwegemischer 14 zu gleichen Anteilen mit Arbeitsmedium Wasser beaufschlagt. Das Arbeitsmedium durchströmt dabei zuerst die zweite Economizerstufe 11 und anschließend in paralleler Schaltung die beiden Economizerpakete 6, 7 der ersten Economizerstufe 5.

Während der Betriebsfahrweise mit einer abgesperrten Abgasstraßen 3, 4 wird bevorzugt ein Hauptanteil des Arbeitsmediums Wasser durch einen Dreiwegemischer 14 dem Economizerpaket 6, 7 der nicht vom Abgas durchströmten Abgasstraße 3, 4 zugeführt, während dem Economizerpaket 6, 7 der vom Abgas durchströmten Abgasstraße 3, 4 ein kleiner Anteil von vorzugsweise 5 - 50 % des gesamten Arbeitsmediums zugeführt wird. Im angeführten Beispiel wird ca. 10 % Anteil des gesamten Arbeitsmediums dem Economizerpaket 6, 7 der vom Abgas durchströmten Abgasstraße 3, 4 und die restlichen ca. 90 % Anteil dem Economizerpaket 6, 7 der nicht vom Abgas durchströmten Abgasstraßen 3, 4 zugeführt.

Durch die erfindungsgemäßen Maßnahmen ist es ermöglicht, Verbrennungsabgase aus einer Abfallverbrennungsanlage, die innerhalb eines Lastbereiches von ca. 50 - 110 % der Nennlast betrieben wird, innerhalb eines vorbestimmten DENOX-Reaktor-Betriebstemperaturbereiches von 250 - 350 °C, vorzugsweise innerhalb eines "Temperaturfensters" von 280 - 320 °C, in einem DENOX-Reaktor 10 durch selektive katalytische Reduktion (SCR-Verfahren) weitgehend von Stickoxiden zu mindern ohne Primärenergieeinsatz zur Temperaturerhöhung des Abgases oder Einsatz von Einspritz- oder Verdampfungskühlern zur Temperatursenkung des Abgases.

Ferner wird durch die Absperrung einer Abgasstraße 3, 4 nach Unterschreitung des vorbestimmten Teillastbereiches die ansonsten sinkende Abgasgeschwindigkeit innerhalb der durchströmten Abgasstraße 3 oder 4 erhöht und somit die Abscheideleistung des als Abscheider 8, 9 bevorzugt eingesetzten Zyklonabscheiders in vorteilhafter Weise wesentlich verbessert.

Stromaufwärts des DENOX-Reaktors 10 wird dem Verbrennungsabgas durch Mittel 15 in bekannter Weise Reduktionsmittel, z. B. Ammoniak oder eine wäßrige Ammoniaklösung, für die selektive katalytische Reduktion im mit DENOX-Katalysatoren bestückten DENOX-Reaktor 10 aufgegeben. Die Beigabe des Reduktionsmittels wird bevorzugt im Abscheider 8, 9 vorgenommen. Sind keine Abscheider 8, 9 vorgesehen, so wird das Reduktionsmittel zwischen erster Economizerstufe 5 und DENOX-Reaktor 10 in den Abgasstraßen 3, 4 durch Mittel 15 zugegeben. Wird das Verbrennungsabgas nur durch eine Abgasstraße 3, 4 geleitet, so unterbleibt ebenfalls die Zufuhr von Reduktionsmittel in der abgesperrten Abgasstraße 4, 3.

Nach Durchströmung des DENOX-Reaktors 10 und der darin erfolgten Stickoxidminderung wird erfindungsgemäß das Verbrennungsabgas durch eine, dem DENOX-Reaktor 10 nachgeschaltete zweite Economizerstufe 11 geleitet und dadurch auf eine gewünschte Abgastemperatur weiter herabgekühlt, beispielsweise auf 230 °C Abgastemperatur.

Die zweite Economizerstufe 11, die wasserseitig mit der ersten Economizerstufe 5 verbunden ist, wird dabei bevorzugt in das Gehäuse des DENOX-Reaktors 10 integriert und diesem in Abgasströmungsrichtung gesehen unmittelbar nachgeschaltet. Durch diese erfindungsgemäße Maßnahme wird in vorteilhafter Weise eine kostengünstige und kompakte Bauweise des DENOX-Reaktors 10 mit integrierter zweiter Economizerstufe 11 sowie der Gesamtanlage erzielt.

Das Verbrennungsabgas kann stromabwärts der zweiten Economizerstufe 11 in bekannter Weise einer weiteren Nachbehandlung unterzogen werden, bevor es in die Atmosphäre abgeleitet wird.

### Legende

- 1: Abgasleitung
- 2: Gasweiche
- 3: Abgasstraße
- 4: Abgasstraße
- 5: Erste Economizerstufe (verbrennungsabgasseitig)
- 6: Economizerpaket der ersten Economizerstufe
- 7: Economizerpaket der ersten Economizerstufe
- 8: Abscheider
- 9: Abscheider
- 10: DENOX-Reaktor mit DENOX-Katalysator
- 11: Zweite Economizerstufe (verbrennungsabgasseitig)
- 12: Antrieb
- 13: Steuermittel
- 14: Dreiwegemischer
- 15: Mittel für Reduktionsmittelaufgabe
- 16: Mittel für Temperaturerfassung

## Patentansprüche

1. Verfahren zur Stickoxidminderung von Verbrennungsabgasen, insbesondere von Verbrennungsabgasen aus Abfallverbrennungsanlagen, bei dem das aus der Verbrennungsanlage durch eine Abgasleitung austretende Verbrennungsabgas unter Zuhilfenahme eines Reduktionsmittels in einem DENOX-Reaktor mittels SCR-Verfahren entstickt wird, wobei das Verbrennungsabgas vor Eintritt in den DENOX-Reaktor (10) durch eine erste Economizerstufe (5) auf einen vorbestimmten DENOX-Reaktor-Betriebstemperaturbereich abgekühlt und nach der Entstickung im DENOX-Reaktor (10) in einer mit der ersten Economizerstufe (5) wasserseitig verbundenen, zweiten Economizerstufe (11) auf eine vorbestimmte Abgastemperatur weiter abgekühlt wird, wobei die erste Economizerstufe (5) aus zwei wasserseitig zueinander parallel geschalteten Economizerpaketen (6, 7) gebildet ist und jeweils ein Economizerpaket (6, 7) in einer eigenen Abgasstraße (3, 4) angeordnet ist, und der Eintritt in die Abgasstraßen (3, 4) mit einer steuerbaren und der Regelung der Verbrennungsabgastemperatur dienenden Gasweiche (2) ausgebildet ist, die bei Unterschreitung eines vorbestimmten Teillastbereiches der Verbrennungsanlage von Auf- in Zu-Stellung gesteuert wird und eine Abgasstraße (3, 4) absperrt und die bei Überschreitung des vorbestimmten Teillastbereiches von Zu-in Auf-Stellung gesteuert wird und beide Abgasstraßen (3, 4) freigibt, wobei bei Betrieb mit einer abgesperrten Abgasstraße (3, 4) zur Regelung der Verbrennungsabgastemperatur die Speisewasser-Durchflussmenge des vom Verbrennungsabgas beaufschlagten Economizerpaketes (6, 7) geregelt wird.

2. Verfahren nach Anspruch 1, **dadurch gekennzeichnet, daß** das Verbrennungsabgas durch die erste Economizerstufe (5) auf einen vorbestimmten DENOX-Betriebstemperaturbereich von 250 - 350 °C abgekühlt wird.

3. Verfahren nach Anspruch 1, **dadurch gekennzeichnet, daß** das Verbrennungsabgas durch die erste Economizerstufe (5) auf einen vorbestimmten DENOX-Betriebstemperaturbereich von 280 - 320 °C abgekühlt wird.

4. Verfahren nach einem der vorgenannten Ansprüche, **dadurch gekennzeichnet, daß** bei mengenmäßig gleicher Speisewasser-Beaufschlagung beider Economizerpakete (6, 7) die Abkühlung des Verbrennungsabgases durch gleiche wärmetechnische Auslegungsparameter beider Economizerpakete (6, 7) in den jeweiligen Abgasstraßen (3, 4) im wesentlichen gleich groß ist.

5. Verfahren nach einem der vorgenannten Ansprüche, **dadurch gekennzeichnet, daß** das Verbrennungsabgas zwischen der ersten Economizerstufe (5) und dem DENOX-Reaktor (10) durch Abscheider (8, 9) von Feststoffen gereinigt wird, wobei das Abgas in jeder Abgasstraße (3, 4) durch mindestens einen Abscheider (8, 9) gereinigt wird.

6. Verfahren nach einem der vorgenannten Ansprüche, **dadurch gekennzeichnet, daß** die Abscheideleistung der Abscheider (8, 9) in den jeweiligen Abgasstraßen (3, 4) gleich groß ist.

7. Verfahren nach einem der vorgenannten Ansprüche, **dadurch gekennzeichnet, daß** die Abgasreinigung von Feststoffen in den jeweiligen Abgasstraßen (3, 4) durch Zyklonabscheidung erfolgt.

8. Verfahren nach einem der vorgenannten Ansprüche, **dadurch gekennzeichnet, daß** das Reduktionsmittel durch Mittel (15) dem Verbrennungsabgas innerhalb der Abgasstraßen (3, 4) und/oder Abscheider (8, 9) zugesetzt wird.

9. Verfahren nach einem der vorgenannten Ansprüche, **dadurch gekennzeichnet, daß** in Strömungsrichtung des Abgases gesehen bei Durchströmung beider Abgasstraßen (3, 4) am Austritt des Verbrennungsabgases aus den Abgasstraßen (3, 4) im wesentlichen gleiche Strömungs- und Druckverhältnisse vorherrschen.

10. Verfahren nach einem der vorgenannten Ansprüche, **dadurch gekennzeichnet, daß** bei Absperrung einer Abgasstraße (3, 4) und Beaufschlagung durch Verbrennungsabgas nur eines Economizerpaketes (6, 7) dieses mit 5 - 50 %, bezogen auf Gesamtmenge, Speisewasser beaufschlagt wird.

11. Verfahren nach einem der vorgenannten Ansprüche, **dadurch gekennzeichnet, daß** Verbrennungsabgase im Lastbereich zwischen 50 und 110 % der Verbrennungsanlage, bezogen auf Nennlast, gereinigt werden.

12. Verfahren nach einem der vorgenannten Ansprüche, **dadurch gekennzeichnet, daß** der Teillastbereich, bezogen auf Nennlast der Verbrennungsanlage, zur Umsteuerung der Gasweiche (2) bei 60 - 80 % liegt.

13. Verfahren nach einem der vorgenannten Ansprüche, **dadurch gekennzeichnet, daß** das Verbrennungsabgas durch die erste Economizerstufe (5), deren wärmetechnische Auslegungsparameter derart ausgelegt sind, daß das Verbrennungsabgas bei 110 % Leistung der Verbrennungsanlage, bezogen auf Nennlast, und zu Ende der Dampferzeugerreisezeit auf eine Abgastemperatur abgekühlt wird, die der maximalen DENOX-Reaktor-Betriebstemperatur entspricht.

14. Anlage zur Stickoxidminderung von Verbrennungsabgasen, insbesondere von Verbrennungsabgasen aus Abfallverbrennungsanlagen, umfassend
eine Verbrennungsanlage mit einer Abgasleitung (1) und einem der selektiven katalytischen Reduktion dienenden DENOX-Reaktor (10), wobei ein Teil der Abgasleitung (1) stromaufwärts des DENOX-Reaktors (10) aus zwei Abgasstraßen (3, 4) besteht, an deren Eintritt eine steuerbare und der Regelung der Verbrennungsabgastemperatur dienende Gasweiche (2) angeordnet ist, und die jeweils mit einem, eine erste Economizerstufe (5) bildende und zur Einstellung der Abgastemperatur auf einen vorbestimmten DENOX-Reaktor-Betriebstemperaturbereich dienende Economizerpaket (6, 7) ausgebildet sind, wobei die Economizerpakete (6, 7) wasserseitig zueinander parallel geschaltet sind,
eine mit der ersten Economizerstufe (5) wasserseitig verbundene zweite Economizerstufe (11) in Durchströmungsrichtung des Abgases stromabwärts unmittelbar dem DENOX-Reaktor (10) nachgeordnet ist,
mit Einrichtungen (12, 13) zur Steuerung und Betätigung der Gasweiche (2) in Auf- oder Zu-Stellung zur Beaufschlagung von einem oder zwei Economizerpaketen (6, 7) durch Abgas in Abhängigkeit eines vorbestimmten Teillastbereiches der Verbrennungsanlage und wobei zur Regelung der Verbrennungsabgastemperatur bei Beaufschlagung von nur einer Abgasstraße (3, 4) die Speisewasser-Durchflussmenge des vom Verbrennungsabgas beaufschlagten Economizerpaketes (6, 7) regelbar ist.

15. Anlage nach Anspruch 14, **dadurch gekennzeichnet, daß** die zweite Economizerstufe (11) im DENOX-Reaktor (10) integriert ist.

16. Anlage nach Anspruch 14 oder 15, **dadurch gekennzeichnet, daß** bei Zu-Stellung der Gasweiche (2) entweder die Abgasstraße (3) oder die Abgasstraße (4) abgesperrt ist.

17. Anlage nach einem der vorgenannten Ansprüche 14 bis 16, **dadurch gekennzeichnet, daß** jede Abgasstraße (3, 4) in Durchströmungsrichtung des Abgases stromabwärts der Economizerpakete (6, 7) mit mindestens einem Abscheider (8, 9) zur Reinigung des Abgases von Feststoffen ausgebildet ist.

18. Anlage nach einem der vorgenannten Ansprüche 14 bis 17, **dadurch gekennzeichnet, daß** die Abscheider (8, 9) der jeweiligen Abgasstraßen (3, 4) gleich große Abscheideleistungen besitzen.

19. Anlage nach einem der vorgenannten Ansprüche 14 bis 18, **dadurch gekennzeichnet, daß** die Abscheider (8, 9) als Zyklonabscheider ausgebildet sind.

20. Anlage nach einem der vorgenannten Ansprüche 14 bis 19, **dadurch gekennzeichnet, daß** die wärmetechnischen Auslegungsparameter der Economizerpakete (6, 7) identisch sind.

21. Anlage nach einem der vorgenannten Ansprüche 14 bis 20, **dadurch gekennzeichnet, daß** die Economizerpakete (6, 7) innerhalb der jeweiligen Abgasstraße (3, 4) parallel zueinander ausgebildet sind.

22. Anlage nach einem der vorgenannten Ansprüche 14 bis 21, **dadurch gekennzeichnet, daß** die Abscheider (8, 9) innerhalb der jeweiligen Abgasstraße (3, 4) parallel zueinander ausgebildet sind.

23. Anlage nach einem der vorgenannten Ansprüche 14 bis 22, **dadurch gekennzeichnet, daß** die Abgasstraßen (3, 4) parallel zueinander ausgebildet sind.

24. Anlage nach einem der vorgenannten Ansprüche 14 bis 23, **dadurch gekennzeichnet, daß** die Querschnitte der Abgasstraßen (3, 4) gleich groß sind.

25. Anlage nach einem der vorgenannten Ansprüche 14 bis 24, **dadurch gekennzeichnet, daß** die Abgasstraßen (3, 4) und/oder Abscheider (8, 9) mit Mittel (15) zur Aufgabe von Reduktionsmittel ausgebildet sind.

26. Anlage nach einem der vorgenannten Ansprüche 14 bis 25, **dadurch gekennzeichnet, daß** die wärmetechnischen Auslegungsparameter der ersten Economizerstufe (5) derart ausgelegt sind, daß das Verbrennungsabgas bei 110 % Leistung der Verbrennungsanlage, bezogen auf Nennlast, und zu Ende der Dampferzeugerreisezeit auf eine Abgastemperatur abgekühlt wird, die der maximalen DENOX-Reaktor-Betriebstemperatur entspricht.

## Claims

1. Method for NOx reduction of combustion gases, in particular, combustion gases from waste incineration plants, wherein the combustion gas escaping from the combustion plant through a waste gas pipe is denitrified with the aid of a reducing agent in a DENOX reactor by means of a selective catalytic reduction process, the combustion gas upstream of the DENOX reactor (10) being cooled down by a first economiser stage (5) to a predetermined DENOX reactor operating temperature range and being further cooled down to a predetermined waste gas temperature after the NOx removal in the DENOX reactor (10) in a second economiser stage (11) which is connected with the first economiser stage (5) on the water side, the first economiser stage (5) being made up of two economiser banks (6, 7) which are connected in parallel to each other on the water side, one economiser bank (6, 7) each being arranged in a separate waste gas line (3, 4), and the inlet into the waste gas lines (3, 4) being provided with a controllable gas flow diverter (2) which serves to control the combustion gas temperature and is adjusted from Open to Closed position if the part-load falls below the predetermined part-load range of the combustion plant and isolates one waste gas line (3, 4) and which is adjusted from Closed to Open position if the predetermined part-load range is exceeded and releases both waste gas lines (3, 4), the feedwater flow rate of the economiser bank (6, 7) admitted with combustion gas being controlled for the combustion gas temperature control in case of any operation with an isolated waste gas line (3, 4).

2. Method according to claim 1 **characterised in that** the combustion gas is cooled down by the first economiser stage (5) to a predetermined DENOX operating temperature range of 250 - 350 °C.

3. Method according to claim 1 **characterised in that** the combustion gas is cooled down by the first economiser stage (5) to a predetermined DENOX operating temperature range of 280 - 320 °C.

4. Method according to one of the above-mentioned claims **characterised in that** in case of any feedwater admission to both economiser banks (6, 7) with an identical feedwater flow rate the cooling of the combustion gas is mainly identical on account of the same thermal design parameters of both economiser banks (6, 7) in the relevant waste gas lines (3, 4).

5. Method according to one of the above-mentioned claims **characterised in that** the combustion gas between the first economiser stage (5) and the DENOX reactor (10) is cleaned from any solids by separators (8, 9), wherein the waste gas is cleaned in each waste gas line (3, 4) by at least one separator (8, 9).

6. Method according to one of the above-mentioned claims **characterised in that** the removal efficiency of the separators (8, 9) in the relevant waste gas lines (3, 4) attains the same level.

7. Method according to one of the above-mentioned claims **characterised in that** the waste gas cleaning from solids in the relevant waste gas lines (3, 4) is done by means of cyclone separation.

8. Method according to one of the above-mentioned claims **characterised in that** the reducing agent is added to the combustion gas by devices (15) within the waste gas lines (3, 4) and/or separators (8, 9).

9. Method according to one of the above-mentioned claims **characterised in that** seen in flow direction of the waste gas mainly the same flow and pressure conditions prevail at the outlet of the combustion gas from the waste gas lines (3, 4) when both waste gas lines (3, 4) are passed.

10. Method according to one of the above-mentioned claims **characterised in that** in case of any isolation of one waste gas line (3, 4) and admission of combustion gas to only one economiser bank (6, 7), 5 - 50 % of feedwater referred to the total flow rate is admitted to this economiser bank.

11. Method according to one of the above-mentioned claims **characterised in that** combustion gases are cleaned in the load range between 50 and 110 % of the combustion plant referred to nominal load.

12. Method according to one of the above-mentioned claims **characterised in that** the part-load range for the switch-over of the gas flow diverter (2) is between 60-80 % referred to the nominal load of the combustion plant.

13. Method according to one of the above-mentioned claims **characterised in that** the thermal parameters of the first economiser stage (5) are designed such that the combustion gas at 110 % output of the combustion plant, referred to nominal load, and at the end of the steam generator availability period is cooled down to a waste gas temperature which corresponds to the max. DENOX reactor operating temperature.

14. Installation for NOx reduction of combustion gases, in particular, combustion gases from waste incineration plants, comprising
one combustion plant with one waste gas pipe (1) and one DENOX reactor (10) serving the selective catalytic reduction (10), wherein one part of the waste gas pipe (1) arranged upstream of the DENOX reactor (10) is made up of two waste gas lines (3, 4), the inlet of which being provided with a controllable gas flow diverter (2) which serves to control the combustion gas temperature, the two waste gas lines each being provided with one economiser bank (6, 7) which forms a first economiser stage (5) and serves to adjust the waste gas temperature to a predetermined DENOX reactor operating temperature range, the economiser banks (6, 7) being connected in parallel to each other on the water side,
a second economiser stage (11) connected with the first economiser stage (5) on the water side which is arranged directly downstream of the DENOX reactor (10) in flow direction of the waste gas,
devices (12, 13) for the control and actuation of the gas flow diverter (2) in Open or Closed position for the admission of waste gas to one or two economiser banks (6, 7) as a function of a predetermined part-load range of the combustion plant,
and wherein the feedwater flow rate of the economiser bank (6, 7) which is admitted with the combustion gas is controllable for the combustion gas temperature control in case of any admission to only one waste gas line (3, 4).

15. Installation according to claim 14 **characterised in that** the second economiser stage (11) is integrated into the DENOX reactor (10).

16. Installation according to claim 14 or 15 **characterised in that** in case of any Closed position of the gas flow diverter (2) either waste gas line (3) or waste gas line (4) is isolated.

17. Installation according to one of the above-mentioned claims 14 to 16 **characterised in that** each waste gas line (3, 4) is at least provided with one separator (8, 9) in flow direction of the waste gas downstream of the economiser banks (6, 7) for cleaning the waste gas from any solids.

18. Installation according to one of the above-mentioned claims 14 to 17 **characterised in that** the separators (8, 9) of the relevant waste gas lines (3, 4) attain equal removal efficiencies.

19. Installation according to one of the above-mentioned claims 14 to 18 **characterised in that** the separators (8, 9) are designed as cyclone separators.

20. Installation according to one of the above-mentioned claims 14 to 19 **characterised in that** the thermal design parameters of the economiser banks (6, 7) are identical.

21. Installation according to one of the above-mentioned claims 14 to 20 **characterised in that** the economiser banks (6, 7) within the relevant waste gas line (3, 4) are arranged in parallel to each other.

22. Installation according to one of the above-mentioned claims 14 to 21 **characterised in that** the separators (8, 9) within the relevant waste gas line (3, 4) are arranged in parallel to each other.

23. Installation according to one of the above-mentioned claims 14 to 22 **characterised in that** the waste gas lines (3, 4) are arranged in parallel to each other.

24. Installation according to one of the above-mentioned claims 14 to 23 **characterised in that** the cross-sections of the waste gas lines (3, 4) have the same dimensions.

25. Installation according to one of the above-mentioned claims 14 to 24 **characterised in that** the waste gas lines (3, 4) and/or separators (8, 9) are provided with devices (15) for the feeding of reducing agents.

26. Installation according to one of the above-mentioned claims 14 to 25 **characterised in that** the thermal design parameters of the first economiser stage (5) are designed such that the combustion gas at 110 % output of the combustion plant referred to nominal load and at the end of the steam generator availability period is cooled down to a waste gas temperature which corresponds to the max. DENOX reactor operating temperature.

## Revendications

1. Méthode pour la réduction d'oxyde azotique contenu dans des gaz de combustion, en particulier des gaz de combustion produits dans des usines d'incinération des ordures ménagères, lors de laquelle le gaz de fumée sortant de l'installation d'incinération par un carneau de gaz de fumée est dénitrifié à l'aide d'un agent de réduction dans un réacteur DENOX au moyen d'une méthode de réduction catalytique sélective, le gaz de fumée étant refroidi par un premier étage d'économiseur (5) à un domaine de température de service prédéfini du réacteur DENOX avant d'entrer dans le réacteur DENOX (10) et suite à la dénitrification se passant dans le réacteur DENOX (10) le refroidissement du gaz de fumée étant continué jusqu'à une température de gaz de fumée prédéfinie dans un deuxième étage d'économiseur (11) étant connecté au premier étage d'économiseur (5) du côté d'eau, le premier étage d'économiseur (5) étant formé de deux faisceaux d'économiseur (6, 7), qui sont arrangés en parallèle au côté d'eau, et chacun des faisceaux d'économiseur (6, 7) étant disposé dans une propre ligne de gaz de fumée (3, 4) et l'entrée dans les lignes de gaz de fumée (3, 4) étant équipée d'un dispositif de distribution de gaz (2), qui est réglable et sert à mettre au point la température de gaz de combustion et qui lors du passage en dessous d'une plage de charge partielle prédéfinie de l'installation de combustion est réglé de la position Ouvert en position Fermé en coupant une ligne de gaz de fumée (3, 4) et qui lors du passage en dessus de la plage de charge partielle prédéfinie est réglé de la position Fermé en position Ouvert en libérant les deux lignes de gaz de fumée (3, 4), la quantité d'eau d'alimentation du faisceau d'économiseur (6, 7) passant à travers, auquel de gaz de combustion est admis, étant réglée pour mettre au point la température de gaz de combustion lors de l'opération utilisant une ligne de gaz de fumée (3, 4) coupée .

2. Méthode selon la revendication 1, **caractérisée en ce que** le gaz de combustion est refroidi par le premier étage d'économiseur (5) à un domaine de température de service DENOX prédéfini de 250 - 350 °C.

3. Méthode selon la revendication 1, **caractérisée en ce que** le gaz de combustion est refroidi par le premier étage d'économiseur (5) à un domaine de température de service DENOX prédéfini de 280 - 320 °C.

4. Méthode selon l'une quelconque des revendications précédentes, **caractérisée en ce que** lors d'une admission d'eau d'alimentation d'une même quantité aux deux faisceaux d'économiseur (6, 7), pour l'essentiel le refroidissement du gaz de combustion atteint le même niveau sous l'effet des mêmes paramètres thermiques d'engineering des deux faisceaux d'économiseur (6, 7) dans les lignes de gaz de fumée respectives (3, 4).

5. Méthode selon l'une quelconque des revendications précédentes, **caractérisée en ce que** le gaz de combustion entre le premier étage d'économiseur (5) et le réacteur DENOX (10) est nettoyé de matières solides par des dépoussiéreurs (8, 9), le gaz de fumée étant nettoyé dans chaque ligne de gaz de fumée (3, 4) par au moins un dépoussiéreur (8, 9).

6. Méthode selon l'une quelconque des revendications précédentes, **caractérisée en ce que** la capacité de séparation des dépoussiéreurs (8, 9) dans les lignes de gaz de fumée respectives (3, 4) atteint le même niveau.

7. Méthode selon l'une quelconque des revendications précédentes, **caractérisée en ce que** le nettoyage du gaz de fumée de matières solides dans les lignes de gaz de fumée respectives (3, 4) est effectué moyennant une séparation par cyclone.

8. Méthode selon l'une quelconque des revendications précédentes, **caractérisée en ce que** l'agent de réduction est ajouté au gaz de combustion par des installations (15) disposées à l'intérieur des lignes de gaz de fumée (3, 4) et / ou des dépoussiéreurs (8, 9).

9. Méthode selon l'une quelconque des revendications précédentes, **caractérisée en ce que** regardant en direction du courant du gaz de fumée, lors du passage du gaz à travers des deux lignes de gaz de fumée (3, 4) les mêmes conditions de courant et de pression existent pour l'essentiel à la sortie du gaz de combustion des lignes de gaz de fumée (3, 4).

10. Méthode selon l'une quelconque des revendications précédentes, **caractérisée en ce que** lors d'une coupure d'une ligne de gaz de fumée (3, 4) et de l'admission de gaz de combustion seulement à un faisceau d'économiseur (6, 7) 5 - 50 % d'eau d'alimentation, par rapport à la quantité totale, est admise à ce faisceau d'économiseur.

11. Méthode selon l'une quelconque des revendications précédentes, **caractérisée en ce que** des gaz de combustion sont nettoyés dons la plage de charge entre 50 et 110 % de l'installation de combustion, par rapport à la charge nominale,

12. Méthode selon l'une quelconque des revendications précédentes, **caractérisée en ce que** la plage de charge partielle, par rapport à la charge nominale de l'installation de combustion, utilisée pour le changement de marche du dispositif de distribution de gaz (2) est à 60 - 80 %.

13. Méthode selon l'une quelconque des revendications précédentes, **caractérisée en ce que** les paramètres thermiques d'engineering du premier étage d'économiseur (5) sont conçus tellement, que le gaz de combustion, à une capacité de l'installation de combustion de 110 %, par rapport à la charge nominale, et à la fin de la durée de service du générateur de vapeur, est refroidi à une température de gaz de fumée, qui correspond à la température maximale de service du réacteur DENOX.

14. Installation pour la réduction d'oxyde azotique contenu dans des gaz de combustion, en particulier des gaz de combustion produits dans des usines d'incinération des ordures ménagères comprenant
une installation de combustion avec un carneau de gaz de fumée (1) et un réacteur DENOX (10), qui est destiné à la réduction catalytique sélective, une partie du carneau de gaz de fumée (1) disposée en amont du réacteur DENOX (10) étant constituée de deux lignes de gaz de fumée (3, 4), à l'entrée desquelles un dispositif de distribution de gaz (2) est installé, qui est réglable et sert à mettre au point la température de gaz de combustion, et chacune des deux lignes de gaz de fumée étant équipée d'un faisceau d'économiseur (6, 7) formant un premier étage d'économiseur (5) et étant destiné au réglage de la température de gaz de fumée à un domaine de température de service du réacteur DENOX prédéfini, les faisceaux d'économiseur (6, 7) étant arrangés en parallèle au côté d'eau,
un deuxième étage d'économiseur (11) connecté au premier étage d'économiseur (5) au côté d'eau, qui est arrangé directement en aval du réacteur DENOX (10) en direction du courant du gaz de fumée passant à travers,
comprenant des installations (12, 13) pour le réglage et l'actionnement du dispositif de distribution de gaz (2) en position Ouvert ou Fermé pour admettre de gaz de fumée à un ou deux faisceaux d'économiseur (6, 7) dépendant d'une plage de charge partielle prédéfinie de l'installation de combustion
et la quantité d'eau d'alimentation passant à travers du faisceau d'économiseur (6, 7), auquel de gaz de combustion est admis, étant réglable pour mettre au point la température de gaz de combustion lors de l'admission d'une seule ligne de gaz de fumée (3, 4).

15. Installation selon la revendication 14, **caractérisée en ce que** le deuxième étage d'économiseur (11) est intégré dans le réacteur DENOX (10).

16. Installation selon la revendication 14 ou 15, **caractérisée en ce qu'**en position Fermé du dispositif de distribution de gaz (2) soit la ligne de gaz de fumée (3) soit la ligne de gaz de fumée (4) est coupée.

17. Installation selon l'une quelconque des revendications précédentes 14 à 16, **caractérisée en ce que** pour le nettoyage du gaz de fumée de matières solides chaque ligne de gaz de fumée (3, 4) est équipée au moins d'un dépoussiéreur (8, 9) en aval des faisceaux d'économiseur (6, 7) en direction du courant du gaz de fumée.

18. Installation selon l'une quelconque des revendications précédentes 14 à 17, **caractérisée en ce que** les dépoussiéreurs (8, 9) des lignes de gaz de fumée respectives (3, 4) ont la même capacité de séparation.

19. Installation selon l'une quelconque des revendications précédentes 14 à 18, **caractérisée en ce que** les dépoussiéreurs (8, 9) sont des dépoussiéreurs à cyclone.

20. Installation selon l'une quelconque des revendications précédentes 14 à 19, **caractérisée en ce que** les paramètres thermiques d'engineering des faisceaux d'économiseur (6, 7) sont identiques.

21. Installation selon l'une quelconque des revendications précédentes 14 à 20, **caractérisée en ce que** les faisceaux d'économiseur (6, 7) à l'intérieur de la ligne de gaz de fumée respective (3, 4) sont disposés en parallèle.

22. Installation selon l'une quelconque des revendications précédentes 14 à 21, **caractérisée en ce que** les dépoussiéreurs (8, 9) à l'intérieur de la ligne de gaz de fumée respective (3, 4) sont disposés en parallèle.

23. Installation selon l'une quelconque des revendications précédentes 14 à 22, **caractérisée en ce que** les lignes de gaz de fumée (3, 4) sont disposées en parallèle.

24. Installation selon l'une quelconque des revendications précédentes 14 à 23, **caractérisée en ce que** les sections des lignes de gaz de fumée (3, 4) ont les mêmes dimensions.

25. Installation selon l'une quelconque des revendications précédentes 14 à 24, **caractérisée en ce que** les lignes de gaz de fumée (3, 4) et/ou les dépoussiéreurs (8, 9) sont équipés d'installations (15) prévues pour l'alimentation d'agents de réduction.

26. Installation selon l'une quelconque des revendications précédentes 14 à 25, **caractérisée en ce que** les paramètres thermiques d'engineering du premier étage d'économiseur (5) sont conçus tellement, que le gaz de combustion, à une capacité de l'installation de combustion de 110 %, par rapport à la charge nominale, et à la fin de la durée de service du générateur de vapeur, est refroidi à une température de gaz de fumée, qui correspond à la température maximale de service du réacteur DENOX.
